(19) Europäisches Patentamt / European Patent Office / Office européen des brevets

(11) **EP 3 340 169 B1**

(12) **FASCICULE DE BREVET EUROPEEN**

(45) Date de publication et mention de la délivrance du brevet:
**30.03.2022 Bulletin 2022/13**

(21) Numéro de dépôt: **17208269.5**

(22) Date de dépôt: **18.12.2017**

(51) Classification Internationale des Brevets (IPC):
**G06T 5/00** (2006.01)

(52) Classification Coopérative des Brevets (CPC):
**G06T 5/002;** G06T 2207/20012; G06T 2207/20164

(54) **DÉBRUITAGE HYBRIDE D'IMAGES ET DE VIDÉOS BASÉ SUR DES MÉTRIQUES D'INTÉRÊT**

HYBRIDE BILD- UND VIDEO-ENTRAUSCHUNG AUF BASIS VON INTERESSENSMETRIKEN

HYBRID IMAGE AND VIDEO DENOISING BASED ON INTEREST METRICS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2016 FR 1663240**

(43) Date de publication de la demande:
**27.06.2018 Bulletin 2018/26**

(73) Titulaire: **ATEME**
**78140 Velizy Villacoublay (FR)**

(72) Inventeurs:
• **MORA, Elie Gabriel**
**75004 PARIS (FR)**
• **LARBIER, Pierre**
**91570 BIEVRES (FR)**

(74) Mandataire: **Plasseraud IP**
**66, rue de la Chaussée d'Antin**
**75440 Paris Cedex 09 (FR)**

(56) Documents cités:
**WO-A1-2016/185079**

• **BAMBER DAVID C ET AL: "Novel adaptive kernels for image sharpening in the presence of noise", VISUAL INFORMATION PROCESSING XX, SPIE, 1000 20TH ST. BELLINGHAM WA 98225-6705 USA, vol. 8056, no. 1, 13 mai 2011 (2011-05-13), pages 1-7, XP060014399, DOI: 10.1117/12.883806**
• **NEVREZ IMAMOGLU ET AL: "A Saliency Detection Model Using Low-Level Features Based on Wavelet Transform", IEEE TRANSACTIONS ON MULTIMEDIA, IEEE SERVICE CENTER, PISCATAWAY, NJ, US, vol. 15, no. 1, 1 janvier 2013 (2013-01-01), pages 96-105, XP011479815, ISSN: 1520-9210, DOI: 10.1109/TMM.2012.2225034**
• **SHAO-PING LU ET AL: "Saliency-Based Fidelity Adaptation Preprocessing for Video Coding", JOURNAL OF COMPUTER SCIENCE AND TECHNOLOGY, KLUWER ACADEMIC PUBLISHERS, BO, vol. 26, no. 1, 11 janvier 2011 (2011-01-11), pages 195-202, XP019872961, ISSN: 1860-4749, DOI: 10.1007/S11390-011-9426-5**

**Description**

La présente invention se situe dans le domaine du traitement de l'image et de la vidéo, plus précisément dans le domaine du traitement de bruit numérique d'images et de vidéos. L'invention concerne un procédé de traitement de bruit numérique d'une image numérique appelé « débruitage ».

Les images et vidéos numériques présentées sous la forme de données numériques contiennent des informations non-désirées. Ces informations non désirées ne sont pas en lien avec l'image ou la vidéo d'origine. Lors de la transmission d'un signal numérique, il y a transport de ces informations non désirées. Dans le domaine du traitement du signal, ces informations non désirées sont qualifiées en tant que bruit numérique. Ce bruit numérique se matérialise dans le cas d'une image ou d'une vidéo sous la forme de détails aléatoires. Ces détails aléatoires s'ajoutent aux détails de la scène photographiée ou de la séquence filmée. La présence de bruit numérique influe sur la qualité visuelle d'une image ou d'une vidéo numérique : plus la présence de bruit numérique est importante, plus la qualité visuelle est dégradée. Outre le fait que la présence de bruit numérique dégrade la qualité d'une image ou d'une vidéo numérique, la présence de bruit numérique augmente la complexité nécessaire au traitement qui correspond à l'encodage d'une image ou d'une vidéo numérique.

Dans le domaine du traitement du signal, plusieurs types de bruits numériques existent. Par exemple, le bruit thermique peut être lié à la température du capteur utilisé, alors que le bruit communément appelé « poivre et sel » peut être dû à des erreurs de transmission de données. Le traitement utilisé pour diminuer ou supprimer le bruit d'une image ou vidéo est appelé « débruitage ». Par conséquent, dans la suite de la description de la présente invention, les termes «traitement » et « débruitage » sont employés avec une signification identique. A cet effet, on entend par débruiteur ou type de traitement, un filtre employé pour effectuer le débruitage ou traitement, à savoir diminuer ou supprimer le bruit présent sur une image ou une vidéo numérique.

L'efficacité d'un débruiteur se mesure par sa capacité à diminuer ou supprimer le bruit présent sur une image ou une vidéo numérique tout en conservant les détails de celle-ci. L'efficacité peut se mesurer à l'aide d'une comparaison entre l'image originale et l'image débruitée. Il est alors possible, pour déterminer l'efficacité d'un débruiteur, de calculer la somme des distorsions au carré (SSD), la somme des distorsions absolues (SAD) ou un rapport signal sur bruit (PSNR).

Un débruiteur est nécessairement associé à une complexité de traitement. La complexité d'un débruiteur s'évalue en comptabilisant le nombre d'opérations exécutées pour diminuer ou supprimer le bruit. Il est possible que le nombre d'opérations exécutées soit difficile à déterminer. Dans ce cas la complexité d'un débruiteur est déterminée en fonction du temps de traitement, c'est-à-dire le nombre d'images débruitées par seconde ou le temps nécessaire pour débruiter une image. De manière générale, l'augmentation de l'efficacité d'un débruiteur va de pair avec l'augmentation de sa complexité.

Dans le domaine du traitement d'image et de vidéo, il est souvent introduit le rapport ou compromis efficacité / complexité. Dans le but de débruiter images et vidéos, il existe donc plusieurs débruiteurs à compromis efficacité / complexité différents. Par conséquent, plusieurs choix de débruiteurs sont possibles pour débruiter une image ou une vidéo. Le fait d'utiliser une combinaison de plusieurs débruiteurs pour débruiter une image ou une vidéo est appelé débruitage hybride d'images et de vidéos. Par extension, plusieurs débruiteurs peuvent être utilisés pour débruiter différentes zones au sein d'une même image.

Plusieurs travaux autour du débruitage hybride sont proposés dans la littérature. Dans ces travaux, le choix des débruiteurs utilisés pour débruiter les différentes zones de l'image est basé sur des métriques statistiques qui caractérisent le bruit. L'utilisation de métriques statistiques caractérisant le bruit permet ainsi de déterminer le débruiteur le plus adapté pour enlever le bruit. Dans la littérature, Chen et al, « An intelligent video noise réduction method using adaptative spatial and motion-compensation temporal filter, IEEE Conference on Computational Photography 2003 » propose d'utiliser la variance et la JND (en anglais Just Noticeable Distorsion) pour choisir entre quatre débruiteurs différents sur une zone donnée. Les travaux de Mosseri et al, « Combining the power of internal and external denoising, International Conference on Computational Photography, 2003 » combinent deux méthodes de débruitage : une méthode de débruitage interne qui consiste à débruiter un patch d'image en utilisant d'autres patchs bruités de la même image, et une méthode de débruitage externe qui consiste à débruiter un patch d'image en utilisant des patchs naturels externes qui ne contiennent pas de bruit. Le choix entre la première méthode et la deuxième méthode est basé sur un rapport signal sur bruit estimé au niveau du patch.

Le débruitage hybride proposé dans la littérature s'adapte toujours aux caractéristiques du bruit. Son but étant d'améliorer l'efficacité du débruitage sur l'intégralité de l'image ou de la vidéo, la complexité du débruitage n'est en général pas considérée. Or dans le but qu'une solution de débruitage soit adoptée dans l'industrie, il est nécessaire qu'elle satisfasse des contraintes parfois fortes en termes de complexité. Afin d'obtenir un compromis efficacité / complexité plus intéressant, l'efficacité d'un débruiteur doit être modulée par l'intérêt porté au contenu de l'image ou de la vidéo à débruiter. Il y a donc un besoin d'adapter le choix d'un ou plusieurs débruiteurs aux caractéristiques de l'image plutôt qu'à celles du bruit.

WO2016/185079 décrit un procédé de débruitage d'image où l'image est traitée par des filtres passe-bas gaussiens. Plusieurs métriques d'intérêt relative à la profondeur sont calculées pour chaque bloc d'image et un intérêt global est déduit de ces métriques. Des filtres gaussiens de différentes forces sont définis en variant la taille de leur et leur écart-type, l'accroissement de la taille des filtres considérés correspondant à un accroissement de leur complexité de traitement. Une force de filtrage (et donc de complexité de traitement) est associée à chaque intervalle de l'intérêt global calculé pour le bloc, et le filtre sélectionné est ensuite appliqué au bloc.

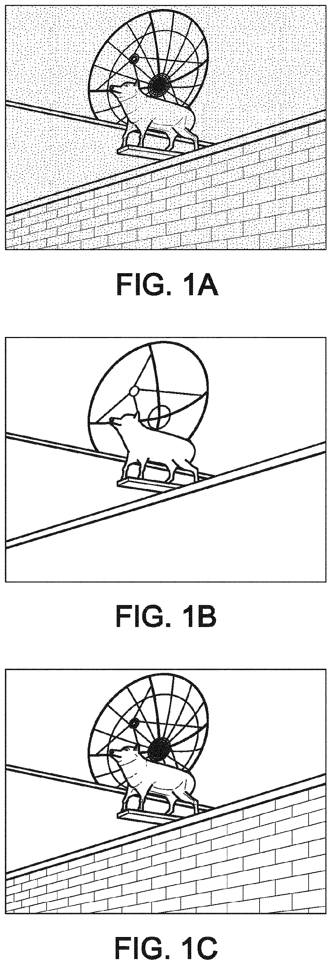

La figure 1A représente une image originale bruitée. L'image originale représente plusieurs bâtiments ainsi qu'une statue d'animal. La figure 1B représente la même image obtenue après débruitage avec un filtre Gaussien, de taille de noyau 5x5. Le résultat obtenu sur la figure 1B est relativement lisse, en effet les détails de l'animal ainsi que ceux des bâtiments ont disparu, seuls les contours sont conservés. Le bruit présent sur la figure 1A sous forme de nuage de points a néanmoins été supprimé. Par conséquent, le bruit présent sur l'image originale a été réduit sur la figure 1B.

L'utilisation d'un filtre Gaussien pour débruiter une image est une solution à faible complexité. La figure 1C représente l'image originale débruitée à l'aide d'un débruiteur vidéo MCTemporalDenoise. Les détails de l'image originale sont mieux conservés sur la figure 1C que sur la figure 1B. Cela s'explique par le fait que le débruiteur vidéo MCTemporalDenoise a une complexité très élevée, il s'agit donc d'un débruiteur hautement efficace.

L'état de la technique, comme décrit précédemment, concerne l'amélioration des compromis efficacité / complexité à travers l'élaboration de nouveaux filtres, ou l'adaptation du débruitage en fonction du bruit. Cependant un utilisateur ne porte pas un intérêt égal à toutes les parties d'une image. En effet dans l'exemple des figures 1A, 1B et 1C l'utilisateur final est relativement peu intéressé par le ciel. Par conséquent il est peu utile d'utiliser un débruiteur de complexité très élevée comme le MCTemporalDenoise pour débruiter le ciel. L'utilisateur final porte cependant un intérêt plus élevé sur l'animal ou sur les murs des bâtiments. Les détails des murs et de l'animal sont donc importants à conserver pour l'utilisateur final.

Par conséquent, en comparaison avec les techniques existantes de débruitage hybride et l'exemple des figures 1A, 1B et 1C il existe un besoin d'appliquer des débruiteurs plus ou moins complexes sur des zones de l'image qui, respectivement intéressent plus ou moins l'utilisateur final.

La présente invention vient améliorer la situation.

À cet effet, un premier aspect de l'invention concerne un procédé, mis en œuvre par des moyens informatiques, de traitement de bruit dans une image numérique comportant plusieurs parties d'image, tel que défini par la revendication 1.

Ainsi, il est possible d'adapter le choix d'un traitement de bruit aux caractéristiques d'une image plutôt qu'à celle du bruit. En effet, pour une partie d'image présentant peu d'intérêt pour l'utilisateur final un traitement de bruit peu complexe est utilisé. A l'opposé, pour une partie d'image qui présente un intérêt élevé pour l'utilisateur final, un traitement de bruit complexe est utilisé.

En complément, le traitement déclenché peut être celui ayant le niveau de complexité immédiatement supérieur à l'intérêt global calculé ou ayant un niveau de complexité maximal si l'intérêt global est supérieur au niveau de complexité maximal.

Ainsi, il est possible d'utiliser plusieurs traitements de bruit associés à différents niveaux de complexité ordonnés en comparaison avec l'intérêt global calculé.

Selon un mode de réalisation, chaque traitement peut être défini par au moins un type de traitement combiné à un jeu de paramètres associé au type de traitement, chaque combinaison possible de type de traitement avec un jeu de paramètres associé ayant une efficacité de traitement en relation avec un niveau de complexité pré-estimé à l'étape a), lesdites combinaisons possibles étant ordonnées par niveaux de complexité croissants à l'étape a).

Il est donc possible de définir plusieurs combinaisons de type de traitement de bruit avec un jeu de paramètres associé. L'utilisation de telles combinaisons permet d'améliorer le compromis efficacité / complexité. En effet le même type de traitement de bruit avec des jeux de paramètres différents présente différents niveaux de complexité. Cela augmente les possibilités de traitement d'une image ou partie d'image.

Selon un mode de réalisation, chaque traitement peut être défini par plusieurs types de traitements combinés, chaque type de traitement ayant un jeu de paramètres associé, chaque combinaison possible de types de traitements ayant une efficacité de traitement global en relation avec un niveau de complexité pré-estimé à l'étape a), lesdites combinaisons possibles étant ordonnées par niveaux de complexité croissants à l'étape a).

Ainsi, les possibilités de traitement d'une image ou partie d'image sont augmentées.

Selon un mode de réalisation, à l'étape a), on peut prédéfinir des seuils $(S_1, S_2, ..., S_{|C|-1})$, chaque seuil étant associé à un traitement procurant une efficacité de débruitage recherchée et ce pour un niveau de complexité associé, et à l'étape b), on compare l'intérêt global (IG) à ces seuils.

Selon l'invention, à l'étape b), on calcule K métriques d'intérêts $M_1, M_2, ..., M_K$, associées respectivement aux détails choisis, chaque métrique étant propre à l'un desdits critères d'intérêt prédéfini à l'étape a).

Ainsi, il est possible de quantifier l'intérêt porté par un utilisateur à une image ou partie d'image. Ceci permet une meilleure identification des différents intérêts portés par un utilisateur à une image ou une partie d'image. Par exemple les métriques d'intérêt peuvent concerner la présence d'être vivant, de visage humain ou d'une écriture sur une image.

En complément à l'étape b), l'intérêt global IG est calculé comme fonction des K métriques d'intérêts IG=f ($M_1$, $M_2$,..., $M_K$).

Ainsi, l'intérêt global est défini comme une fonction de plusieurs variables, les variables étant les différentes métriques d'intérêt. Par conséquent il est possible d'affecter des coefficients de pondérations aux différentes métriques d'intérêt. Par exemple, il est possible de considérer qu'un utilisateur est deux fois plus intéressé par la présence d'un visage humain que par la présence d'un arbre sur une image.

Selon un mode de réalisation, l'image numérique peut être une image découpée en N zones de mêmes dimensions.

Ainsi, il est possible pour les N zones de mêmes dimensions, de déterminer la valeur de chaque métrique d'intérêt et de calculer l'intérêt global. Par conséquent il est possible d'attribuer un traitement de bruit pour chaque zone en fonction de l'intérêt global calculé et d'améliorer le compromis efficacité et complexité pour les N zones de mêmes tailles de l'image.

Selon un mode de réalisation, l'image numérique est une image découpée en N zones de dimensions différentes.

Ainsi, il est possible d'appliquer des traitements de bruits différents pour des zones d'image de tailles différentes. En effet dans l'exemple d'une image avec un visage humain au centre et un paysage en arrière-plan, découper l'image en zone de tailles différentes adaptées au contenu de celle-ci permet un gain de temps. En effet, il est possible d'effectuer un débruitage sur une zone d'image plus grande au lieu d'effectuer ce même débruitage sur des partitions plus petites de cette zone. Il y a donc dans ce cas moins de zones à traiter.

Un deuxième aspect de l'invention concerne un programme informatique comportant des instructions pour la mise en œuvre des étapes du procédé lorsque ces instructions sont exécutées par un processeur.

Un troisième aspect de l'invention concerne un dispositif de traitement de bruit apte à débruiter une image numérique comportant plusieurs parties d'image, le dispositif étant défini à la revendication 9.

D'autres caractéristiques et avantages de la présente invention ressortiront de la description ci-dessous, en référence aux figures annexées qui en illustrent un exemple de réalisation dépourvu de tout caractère limitatif et sur lesquelles :

- la figure 1A représente une image originale bruitée ;
- la figure 1B représente une image débruitée avec un filtre Gaussien ;
- la figure 1C représente une image débruitée avec un filtre MCTemporalDenoise ;
- la figure 2A représente une image originale à débruiter ;
- la figure 2B représente une illustration selon une premier mode de réalisation de l'invention ;
- la figure 3A représente une image originale à débruiter ;
- la figure 3B représente une illustration selon un deuxième mode de réalisation de l'invention ;
- La figure 4 illustre des étapes du procédé de traitement de bruit selon un mode de réalisation de l'invention ; et
- La figure 5 illustre un dispositif selon un mode de réalisation de l'invention.

L'invention concerne l'utilisation d'au moins deux débruiteurs ou types de traitements de bruit. Chaque débruiteur ou type de traitement de bruit peut être utilisé avec plusieurs jeux de paramètres associés. Ceci permet d'utiliser un type de traitement de bruit particulier associé à un jeu de paramètres particulier pour appliquer sur une zone particulière d'une image à débruiter. Par exemple si on considère que le ciel de la figure 1A définit une première zone de l'image. Il est possible d'appliquer à cette première zone d'image de la figure 1A un premier type de traitement de bruit associé avec un premier jeu de paramètres. Si l'on considère que l'animal de la figure 1A désigne une deuxième zone de l'image, il est possible d'appliquer à cette deuxième zone d'image un deuxième type de traitement associé avec un deuxième jeu de paramètres. Il est également possible d'appliquer le premier type de traitement associé à un autre jeu de paramètres.

Un des objets de l'invention est de déterminer la combinaison de type de traitement de bruit et de jeu de paramètres associé pour une zone donnée de l'image. La détermination de cette combinaison est effectuée en fonction d'une ou plusieurs métriques calculées sur la zone d'image en question. Ces métriques ont pour but d'évaluer l'intérêt porté à la zone d'image par l'utilisateur final. Ces métriques sont donc ici appelés métriques d'intérêts. Plus l'intérêt porté par l'utilisateur à une zone d'image est élevé, plus l'utilisation de combinaisons complexes est nécessaire. En effet, si l'utilisateur porte un intérêt élevé à une zone d'image, il est nécessaire de débruiter la zone d'image tout en conservant les détails. Si l'intérêt porté par l'utilisateur à la zone d'image est faible, l'utilisation de combinaisons peu complexes peut suffire pour débruiter efficacement la zone d'image.

Ainsi, on considère un ensemble D d'au moins deux débruiteurs ou types de traitement de bruit différents, tel que :

$$D = \{ D_1, D_2, \ldots, D_X \} / X \geq 2,$$

et il existe $D_i$ et $D_j \in D / i \neq j$ et $D_i \neq D_j$ X est un entier naturel, supérieur ou égal à 2, représentant le nombre de débruiteurs. i et j sont des entiers naturels, représentant l'indice du débruiteur. Soit $J_x$ un ensemble de jeux de paramètres associés à un débruiteur $D_x$ :

$$J_x = \left\{ J_{x,1}, J_{x,2}, \ldots, J_{x,Y_x} \right\} / Y_x \geq 1$$

$Y_x$ est un entier naturel, supérieur ou égal à 1, représentant le nombre de jeu paramètres associés à un débruiteur $D_x$.

Soit C l'ensemble, ordonné par complexité croissante, des combinaisons $C_{x,y}$ d'un débruiteur $D_x$ et d'un jeu de paramètres associé $J_{x,y}$ :

$$C = \{ (D_x ; J_{x,y}) / x = 1 \to X, y = 1 \to Y_x ,$$

et $Comp(C_i) \leq Comp(C_j)$ si i < j} Il est possible de représenter l'ensemble de jeux de paramètres associés aux débruiteurs sous la forme d'un tableau:

|  | Paramètre 1 | Paramètre 2 | Paramètre 3 |  | **Colonne J** Paramètre j |  |  |
|---|---|---|---|---|---|---|---|
| Débruiteur $D_1$ | $J_{1,1}$ | $J_{1,2}$ | $J_{1,3}$ | ... | $J_{1,j}$ | ... | $J_{1,Y1}$ |
| Débruiteur $D_2$ | $J_{2,1}$ | $J_{2,2}$ | $J_{2,3}$ | ... | $J_{2,j}$ | ... | $J_{1,Y2}$ |
| Débruiteur $D_3$ | $J_{3,1}$ | $J_{3,2}$ | $J_{3,3}$ | ... | $J_{3,j}$ | ... | $J_{1,Y3}$ |
|  | ... | ... | ... | ... | ... | ... | ... |
|  | ... | ... | ... | ... | ... | ... | ... |
|  | ... | ... | ... | ... | ... | ... | ... |
| **Ligne i** Débruiteur $D_i$ | $J_{i,1}$ | $J_{i,2}$ | $J_{i,3}$ | ... | $J_{i,j}$ | ... | $J_{i,Yi}$ |
|  | ... | ... | ... | ... | ... | ... | ... |
|  | ... | ... | ... | ... | ... | ... | ... |
|  | ... | ... | ... | ... | ... | ... | ... |
|  |  | ... | ... | ... | ... | ... | ... |
| Débruiteur $D_x$ | $J_{X,1}$ | $J_{X,2}$ | $J_{X,3}$ | ... | ... | ... | $J_{X,YX}$ |

Le nombre de combinaisons possible ou le nombre de coefficient du tableau est donc :

$$|C| = \sum_{i=1}^{X} Y_i$$

On rappelle que le nombre de paramètres associés à chaque débruiteur peut être différent, c'est-à-dire qu'il est possible d'avoir $Y_1 \neq Y_2 \neq \ldots \neq Y_X$

Soit M un ensemble de métriques d'intérêt pouvant être calculées pour une zone d'image donnée :

$$M = \{ M_1, M_2, \ldots, M_K \} / K \geq 1$$

K est un entier naturel, supérieur ou égal à 1, représentant le nombre de métriques d'intérêt.

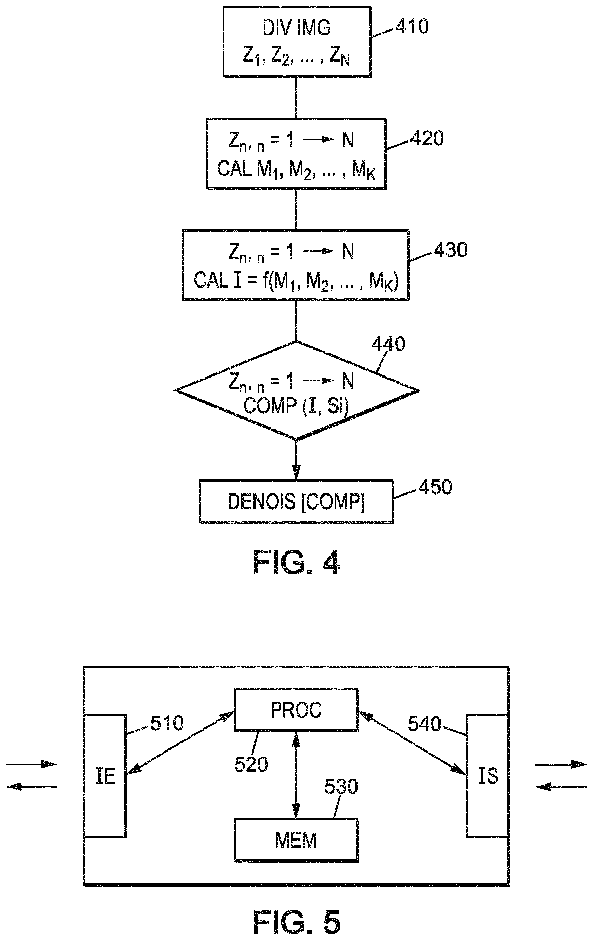

Dans un exemple de réalisation, il peut être proposé, en référence à la figure 4, de :

- Diviser l'image à débruiter en N zones ($Z_1, Z_2, \ldots, Z_N$), (étape 410 de la figure 4)
- Pour chaque zone $Z_n$ , n = 1 → N:

    - Calculer les K métriques d'intérêt $M_1, M_2, \ldots, M_K$, (étape 420)

- Calculer l'intérêt *I* porté à $Z_n$ en fonction des K métriques d'intérêt : $I = f(M_1, M_2, ..., M_K)$, (étape 430)
- Puis, comparer *I* à $|C|$ - 1 seuils : $S_1, S_2, ..., S_{|C|-1}$ / $S_i < S_j$ *si* $i < j$ et sélectionner, pour débruiter $Z_n$, la combinaison $C_1$ *si* $I < S_1$, $C_i$ ($i = 2 \rightarrow |C|$ - 1) *si* $S_{i-1} < I < S_i$ ou $C_{|C|}$ *si* $I > S_{|C|-1}$, (étape 440).

Ensuite, en fonction de la comparaison COMP menée pour chaque zone $Z_n$, on peut procéder au débruitage approprié de cette zone à l'étape de fin 450, avec la combinaison déterminée pour chaque zone.

Une étape optionnelle peut consister à fusionner des zones contiguës ensemble si la même combinaison est sélectionnée pour chacune des zones à fusionner. Dans ce cas, l'étape de fin 450 est appliquée sur la zone totale fusionnée.

Les métriques d'intérêt M peuvent être par exemple :

- un pourcentage de pixels détectés comme peau,

Selon l'invention, les métriques d'intérêt comprennent l'un parmi :

- un pourcentage de pixels détectés comme une écriture sur une image
- une cohérence du champ de vecteur de mouvement,
- un pourcentage de blocs dont l'amplitude du vecteur de mouvement est supérieure à un seuil donné ou
- une valeur de saillance représentative.

Néanmoins, d'autres exemples de métriques peuvent être considérés bien entendu.

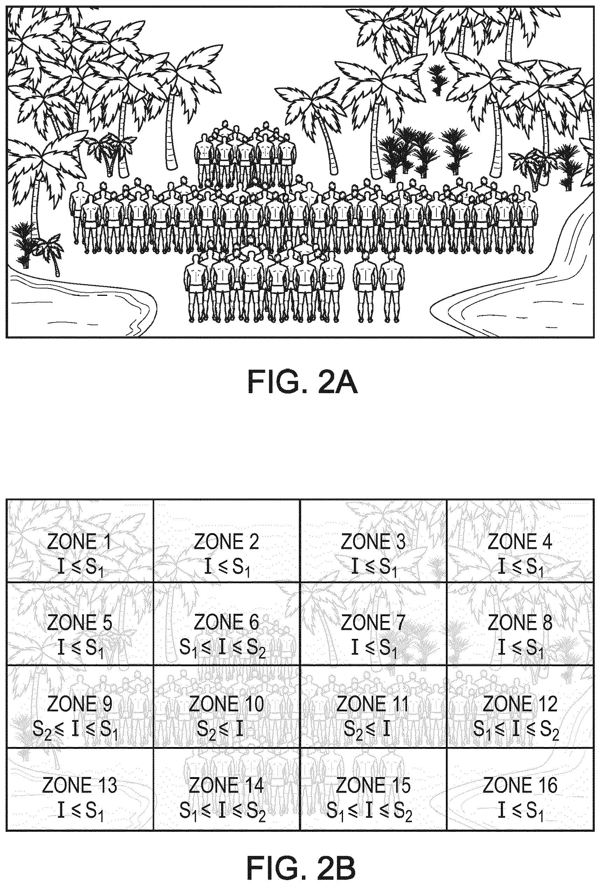

La figure 2A représente une image originale à débruiter. Selon un premier mode de réalisation de l'invention, cette image originale à débruiter est divisée en 16 zones d'image rectangulaires de tailles identiques sur la figure 2B. Les métriques d'intérêts M sont définies ici comme étant le pourcentage de pixels détectés comme peau humaine pour chacune des 16 zones de l'image. On considère donc dans ce premier mode de réalisation de l'invention une seule métrique d'intérêt $M_1$, définie comme suit :

Métrique d'intérêt M = $M_1$ : pourcentage de pixels détectés comme peau

L'intérêt IG global est une fonction à plusieurs variables, les variables étant les différentes métriques d'intérêt. Par conséquent pour ce premier mode de réalisation de l'invention, le calcul de l'intérêt global IG se formule de la manière suivante :

IG = f(M1)= $M_1$ : l'intérêt global IG est égale à la métrique d'intérêt $M_1$

Si le pourcentage de pixels détectés comme peau dépasse 50%, la présence de peau est considérée comme confirmée. Si le pourcentage de pixels détectés comme peau est compris entre 25% et 50%, la présence de peau est considérée comme partielle. Si le pourcentage de pixels détectés comme peau est inférieur à 25%, la présence de peau est considérée comme non confirmée. Lorsque la présence de peau est considérée comme non confirmée pour une zone d'image, la zone d'image est débruitée avec un simple filtre gaussien avec une taille de noyau 5. Si au contraire, la présence de peau est considérée comme confirmée pour une zone d'image, la zone d'image est débruitée avec un filtre FFT2D avec une taille de bloc = 32, taille d'overlap = 16 et force = 4. Dans le dernier cas, c'est-à-dire lorsque la présence de peau est considérée comme partielle pour une zone d'image, la zone d'image est débruitée avec un filtre FFT2D avec une taille d'overlap = 8. La réduction de l'overlap réduit la complexité et l'efficacité du débruitage.

En notant X le nombre de débruiteurs, $Y_i$ le nombre de jeux de paramètres associés au débruiteur $D_i$ avec i =1 $\rightarrow$ 2, le nombre de combinaisons possibles est donc de :

$$|C| = \sum_{i=1}^{X} Y_i = \sum_{i=1}^{2} Y_i = Y_1 + Y_2 = 1 + 2 = 3$$

En effet le premier débruiteur $D_1$ (filtre gaussien) possède un seul jeu de paramètres $J_{1,1}$. Le deuxième débruiteur $D_2$ (FFT2D) possède un ensemble de jeux de paramètres comportant deux jeux de paramètres : $J_{2,1}$ et $J_{2,2}$.

Nous avons donc : D = {$D_1$, $D_2$}

$J_1$ = {$J_{1,1}$} ensemble de jeux de paramètres associés au débruiteur $D_1$.

J2 = {$J_{2,1}$, $J_{2,2}$} ensemble de jeux de paramètres associés au débruiteur $D_2$.

C = {$C_1$, $C_2$, $C_3$} où C est l'ensemble des combinaisons $C_{x,y}$ ordonnée par complexité croissante, avec :

$C_1$ = ($D_1$ ; $J_{1,1}$) est la combinaison du débruiteur $D_1$ avec le jeu de paramètres $J_{1,1}$

$C_2 = (D_2 ; J_{2,1})$ est la combinaison du débruiteur $D_2$ avec le jeu de paramètres $J_{2,1}$
$C_3 = (D_2 ; J_{2,2})$ est la combinaison du débruiteur $D_2$ avec le jeu de paramètres $J_{2,2}$

Il est donc possible de définir les seuils $S_i$ qui sont donc au nombre de

$$|C| - 1 = 3 - 1 = 2$$

Les seuils utilisés sont donc les suivants : $S_1$ = 25 et $S_2$ = 50

La figure 2B, image originale découpée en 16 zones représente la comparaison de l'intérêt global calculé pour chacune des 16 zones par rapport aux seuils $S_1$ et $S_2$ définis ci-dessus.

Zone 1, $I \leq S1$ application de la combinaison $C_1 = (D_1 ; J_{1,1})$ pour débruiter

Zone 2, $I \leq S1$ application de la combinaison $C_1 = (D_1 ; J_{1,1})$ pour débruiter

Zone 3, $I \leq S1$ application de la combinaison $C_1 = (D_1 ; J_{1,1})$ pour débruiter

Zone 4, $I \leq S1$ application de la combinaison $C_1 = (D_1 ; J_{1,1})$ pour débruiter

Zone 5, $I \leq S1$ application de la combinaison $C_1 = (D_1 ; J_{1,1})$ pour débruiter

Zone 6, $S1 \leq I \leq S2$ application de la combinaison $C_2 = (D_2 ; J_{2,1})$ pour débruiter

Zone 7, $I \leq S1$ application de la combinaison $C_1 = (D_1 ; J_{1,1})$ pour débruiter

Zone 8, $I \leq S1$ application de la combinaison $C_1 = (D_1 ; J_{1,1})$ pour débruiter

Zone 9, $S1 \leq I \leq S2$, application de la combinaison $C_2 = (D_2 ; J_{2,1})$ pour débruiter

Zone 10, $S2 \leq I$ application de la combinaison $C_3 = (D_2 ; J_{2,2})$ pour débruiter

Zone 11, $S2 \leq I$ application de la combinaison $C_3 = (D_2 ; J_{2,2})$ pour débruiter

Zone 12, $S_1 \leq I \leq S2$, application de la combinaison $C_2 = (D_2 ; J_{2,1})$ pour débruiter

Zone 13, $I \leq S1$ application de la combinaison $C_1 = (D_1 ; J_{1,1})$ pour débruiter

Zone 14, $S_1 \leq I \leq S2$ application de la combinaison $C_2 = (D_2 ; J_{2,1})$ pour débruiter

Zone 15, $S_1 \leq I \leq S2$ application de la combinaison $C_2 = (D_2 ; J_{2,1})$ pour débruiter

Zone 16, $I \leq S1$ application de la combinaison $C_1 = (D_1 ; J_{1,1})$ pour débruiter

Pour rappel :

$C_1 = (D_1 ; J_{1,1})$ Filtre gaussien $(D_1)$ avec une taille de noyau = 5 $(J_{1,1})$
$C_2 = (D_2 ; J_{2,1})$ Filtre FFT2D $(D_2)$ avec une taille de bloc =32, taille de l'overlap = 8 et force = 4 $(J_{2,1})$
$C_3 = (D_2 ; J_{2,2})$ Filtre FFT2D $(D_2)$ avec une taille de bloc =32, taille de l'overlap = 16 et force = 4 $(J_{2,2})$

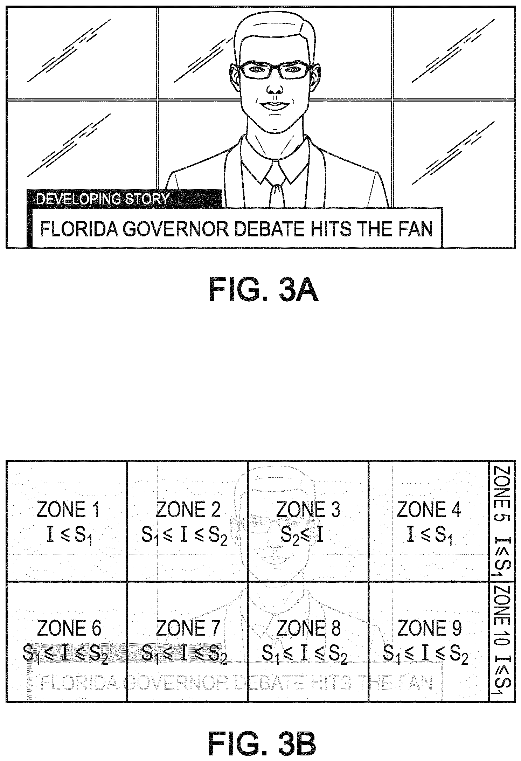

La figure 3A représente une image originale à débruiter illustrant un présentateur de télévision. Selon un deuxième mode de réalisation de l'invention, cette image originale à débruiter est divisée en 10 zones d'image rectangulaires de tailles différentes sur la figure 3B. Les métriques d'intérêts $M_1$ et $M_2$ sont définies pour ce deuxième mode de réalisation comme étant respectivement le pourcentage de pixels détectés comme peau et le pourcentage de pixels ayant un vecteur de mouvement dont l'amplitude est supérieure à 5.

Il y a donc pour ce deuxième mode de réalisation de l'invention deux métriques d'intérêts.

$$\text{Métrique d'intérêt } M = \{M_1, M_2\}$$

Selon ce deuxième mode de réalisation de l'invention l'intérêt global IG se détermine de la manière suivante :

$$IG = f(M_1, M_2) = M_2 + 2{*}M_1$$

Dans ce deuxième mode de réalisation, l'utilisateur final est plus intéressé par la présence de peau que par l'amplitude des vecteurs de mouvement. Par conséquent, un coefficient de pondération de 2 est appliqué à la métrique $M_1$ correspondant au pourcentage de pixels détectés comme peau.

Les métriques d'intérêts $M_1$ et $M_2$ représentant des pourcentages, leurs valeurs respectives sont comprises entre 0 et 100. Par conséquent d'après la relation ci-dessus reliant l'intérêt global IG aux métriques d'intérêt $M_1$ et $M_2$, l'intérêt global IG est compris entre 0 et 300.

Dans le cas où l'intérêt global IG est inférieur à 50 pour une zone d'image, un filtre de moyenne avec une taille de noyau 5 est appliqué pour débruiter la zone d'image. Si l'intérêt global IG est compris entre 50 et 150 un débruiteur FFT2D avec une taille de bloc = 32, une taille de l'overlap = 8 et une force = 4 est appliqué pour débruiter la zone d'image. Enfin, si l'intérêt global IG est supérieur à 150, un débruiteur FGD avec force =50 est appliqué pour débruiter la zone.

Pour rappel, X est le nombre de débruiteur, $Y_i$ le nombre de jeu de paramètres associé au débruiteur $D_i$ avec $1 \leq i \leq 3$ pour ce deuxième mode de réalisation de l'invention.

Le nombre de combinaison possible est donc de :

$$|C| = \sum_{i=1}^{X} Y_i = \sum_{i=1}^{3} Y_i = Y_1 + Y_2 + Y_3 = 1 + 1 + 1 = 3$$

En effet dans ce deuxième mode de réalisation, chaque débruiteur possède un seul jeu de paramètre associé.

Nous avons donc : D = {$D_1$, $D_2$, $D_3$}

$J_1 = \{J_{1,1}\}$ ensemble de jeux paramètres associés au débruiteur $D_1$.

$J2 = \{J_{2,1}\}$ ensemble de jeux paramètres associés au débruiteur $D_2$.

$J_3 = \{J_{3,1}\}$ ensemble de jeux paramètres associés au débruiteur $D_3$.

C = {$C_1$, $C_2$, $C_3$} où C est l'ensemble des combinaisons $C_{x,y}$ ordonnée par complexité croissante, avec :

$C_1 = (D_1 ; J_{1,1})$ est la combinaison du débruiteur $D_1$ avec le jeu de paramètres $J_{1,1}$
$C_2 = (D_2 ; J_{2,1})$ est la combinaison du débruiteur $D_2$ avec le jeu de paramètres $J_{2,1}$
$C_3 = (D_3 ; J_{3,1})$ est la combinaison du débruiteur $D_3$ avec le jeu de paramètres $J_{3,1}$

Il est donc possible de définir les seuils Si qui sont donc au nombre de

$$|C| - 1 = 3 - 1 = 2$$

Les seuils utilisés sont donc les suivants : $S_1 = 50$ et $S_2 = 150$

La figure 3B, image originale découpée en 10 zones de tailles différentes représente la comparaison de l'intérêt global calculé pour chacune des 10 zones par rapport aux seuils $S_1$ et $S_2$ définis ci-dessus.

Zone 1, $I \leq S1$ application de la combinaison $C_1 = (D_1 ; J_{1,1})$ pour débruiter

Zone 2, $S1 \leq I \leq S2$ application de la combinaison $C_2 = (D_2 ; J_{2,1})$ pour débruiter

Zone 3, $S2 \leq I$ application de la combinaison $C_3 = (D_3 ; J_{3,1})$ pour débruiter

Zone 4, $I \leq S1$ application de la combinaison $C_1 = (D_1 ; J_{1,1})$ pour débruiter

Zone 5, $I \le S1$ application de la combinaison $C_1 = (D_1 ; J_{1,1})$ pour débruiter

Zone 6, $S1 \le I \le S2$ application de la combinaison $C_2 = (D_2 ; J_{2,1})$ pour débruiter

Zone 7, $S1 \le I \le S2$ application de la combinaison $C_2 = (D_2 ; J_{2,1})$ pour débruiter

Zone 8, $S1 \le I \le S2$ application de la combinaison $C_2 = (D_2 ; J_{2,1})$ pour débruiter

Zone 9, $S1 \le I \le S2$ application de la combinaison $C_2 = (D_2 ; J_{2,1})$ pour débruiter

Zone 10, $I \le S1$ application de la combinaison $C_1 = (D_1 ; J_{1,1})$ pour débruiter

Pour rappel :

$C_1 = (D_1 ; J_{1,1})$ filtre de moyenne avec une taille de noyau 5
$C_2 = (D_2 ; J_{2,1})$ débruiteur FFT2D avec une taille de bloc = 32, une taille de l'overlap = 8 et une force = 4
$C_3 = (D_3 ; J_{3,1})$ débruiteur FGD avec force =50

L'invention peut être mise en œuvre par un dispositif informatique, tel qu'illustré à titre d'exemple sur la figure 5, lequel comporte un circuit de traitement incluant :

- une interface d'entrée 510, pour recevoir les données d'image à traiter,

- un processeur 520 coopérant avec une mémoire 530, pour traiter les données d'image reçues, et

- une interface de sortie 540 pour délivrer les données d'image traitées par la mise en œuvre du procédé ci-avant.

La mémoire précitée 530 peut stocker typiquement des codes d'instructions du programme informatique au sens de l'invention (dont un exemple d'ordinogramme est présenté sur la figure 4 commentée précédemment). Ces codes d'instructions peuvent être lus par le processeur 520 pour exécuter le procédé selon l'invention. Le dispositif peut comporter en outre une mémoire de travail (distincte ou identique à la mémoire 530) pour stocker des données temporaires, notamment les métriques d'intérêts calculées.

L'invention ne se limite pas aux exemples de modes de réalisation décrits ci-avant, seulement à titre d'exemple, mais elle englobe toutes les variantes que pourra envisager l'homme de l'art dans le cadre des revendications ci-après. Par exemple, l'invention n'est pas limitée pas à l'utilisation d'une ou deux métriques d'intérêt comme décrit dans les modes de réalisation ci-dessus.

## Revendications

1. Procédé, mis en œuvre par des moyens informatiques, de traitement de bruit dans une image numérique comprenant plusieurs parties d'image, le procédé comprenant :

   a) Prédéfinir :

   • Des critères d'intérêt pour débruiter des détails choisis d'une partie d'image quelconque de l'image numérique ;
   • Une pluralité de traitements possibles à appliquer à la partie d'image pour débruiter lesdits détails choisis, chaque traitement ayant une efficacité en relation avec un niveau de complexité associé, lesdits traitements possibles étant ordonnées par niveaux de complexité croissants ;

   b) Pour chaque partie de l'image :

   • Analyser la partie d'image, l'analyse comprenant : quantifier une présence d'un ou plusieurs desdits détails choisis dans la partie d'image et calculer un intérêt global de la partie d'image en fonction de quantifications respectives de présences desdits détails choisis, l'analyse comprenant en outre le calcul de K métriques d'intérêts $M_1, M_2, ..., M_K$, associées respectivement aux détails choisis, chaque métrique étant propre à l'un desdits critères d'intérêt prédéfini, dans lequel l'intérêt global est calculé comme fonction des K métriques d'intérêts IG=f ($M_1$, $M_2$,..., $M_K$), et

• Comparer l'intérêt global auxdits niveaux de complexité, pour déclencher le traitement ayant le niveau de complexité correspondant à l'intérêt global calculé, le procédé étant **caractérisé en ce que**

chacune des K métriques d'intérêts $M_1$, $M_2$, ..., $M_K$ comprend l'un parmi un pourcentage de pixels détectés comme une écriture sur une image, une cohérence du champ de vecteur de mouvement, un pourcentage de blocs dont l'amplitude du vecteur de mouvement est supérieure à un seuil donné, et une valeur de saillance représentative.

2. Procédé selon la revendication 1, dans lequel le traitement déclenché est celui ayant le niveau de complexité immédiatement supérieur à l'intérêt global calculé ou ayant un niveau de complexité maximal si l'intérêt global est supérieur au niveau de complexité maximal.

3. Procédé selon l'une des revendications 1 et 2, dans lequel chaque traitement est défini par au moins un type de traitement combiné à un jeu de paramètres associé au type de traitement, chaque combinaison possible de type de traitement avec un jeu de paramètres associé ayant une efficacité de traitement en relation avec un niveau de complexité pré-estimé à l'étape a), lesdites combinaisons possibles étant ordonnées par niveaux de complexité croissants à l'étape a).

4. Procédé selon la revendication 3, dans lequel chaque traitement est défini par plusieurs types de traitements combinés, chaque type de traitement ayant un jeu de paramètres associé, chaque combinaison possible de types de traitement ayant une efficacité de traitement global en relation avec un niveau de complexité pré-estimé à l'étape a), lesdites combinaisons possibles étant ordonnées par niveaux de complexité croissants à l'étape a).

5. Procédé selon l'une des revendications précédentes, dans lequel, à l'étape a), on prédéfinit des seuils $S_1, S_2,..., S_{|C|-1}$, chaque seuil étant associé à un traitement procurant une efficacité de débruitage recherchée et ce pour un niveau de complexité associé, et à l'étape b), on compare l'intérêt global à ces seuils.

6. Procédé selon l'une des revendications précédentes, dans lequel l'image numérique est une image découpée en N zones de mêmes dimensions.

7. Procédé selon la revendication 1, dans lequel l'image numérique est une image découpée en N zones de dimensions différentes.

8. Programme informatique comportant des instructions pour la mise en œuvre du procédé selon l'une des revendications précédentes, lorsque ces instructions sont exécutées par un processeur.

9. Dispositif de traitement de bruit apte à débruiter une image numérique comprenant plusieurs parties d'image, le dispositif comprenant :

   - un processeur configuré pour effectuer les opérations suivantes :

     a) Prédéfinir :

       • Des critères d'intérêt pour débruiter des détails choisis d'une partie d'image quelconque de l'image numérique ;
       • Une pluralité de traitements possibles à appliquer à une partie d'image pour débruiter lesdits détails choisis, chaque traitement ayant une efficacité en relation avec un niveau de complexité associé, lesdits traitements possibles étant ordonnées par niveaux de complexité croissants ;

     b) Pour chaque partie de l'image :

       • Analyser la partie d'image, l'analyse comprenant quantifier une présence d'un ou plusieurs desdits détails choisis dans la partie d'image et calculer un intérêt global de la partie d'image en fonction de quantifications respectives de présences desdits détails choisis, l'analyse comprenant en outre le calcul de K métriques d'intérêts $M_1, M_2,..., M_K$, associées respectivement aux détails choisis, chaque métrique étant propre à l'un desdits critères d'intérêt prédéfini, dans lequel l'intérêt global est calculé comme fonction des K métriques d'intérêts IG=f ($M_1$, $M_2$,..., $M_K$), et
       • Comparer l'intérêt global auxdits niveaux de complexité, pour déclencher le traitement ayant le niveau de complexité correspondant à l'intérêt global calculé, **caractérisé en ce que**
chacune des K métriques d'intérêts $M_1$, $M_2$, ..., $M_K$ comprend l'un parmi un pourcentage de pixels détectés comme une écriture sur une image, une cohérence du champ de vecteur de mouvement, un pourcentage de blocs dont l'amplitude du vecteur de mouvement est supérieure à un seuil donné, et une valeur de saillance représentative.

10. Dispositif de traitement selon la revendication 9, dans lequel le traitement déclenché est celui ayant le niveau de complexité immédiatement supérieur à l'intérêt global calculé ou ayant un niveau de complexité maximal si l'intérêt global est supérieur au niveau de complexité maximal.

11. Dispositif de traitement selon l'une des revendications 9 et 10, dans lequel chaque traitement est défini par au moins un type de traitement combiné à un jeu de paramètres associé au type de traitement, chaque combinaison possible de type de traitement avec un jeu de paramètres associé ayant une efficacité de traitement en relation avec un niveau de complexité pré-estimé à l'étape a), lesdites combinaisons possibles étant ordonnées par niveaux de complexité croissants à l'étape a).

12. Dispositif de traitement selon la revendication 11, dans lequel chaque traitement est défini par plusieurs types de traitements combinés, chaque type de traitement ayant un jeu de paramètres associé, chaque combinaison possible de types de traitement ayant une efficacité de traitement global en relation avec un niveau de complexité pré-estimé à l'étape a), lesdites combinaisons possibles étant ordonnées par niveaux de complexité croissants à l'étape a).

13. Dispositif de traitement selon l'une des revendications 9 à 13, dans lequel le processeur est en outre configuré pour, à l'étape a), prédéfinir des seuils $S_1, S_2, ..., S_{|C|-1}$, chaque seuil étant associé à un traitement procurant une efficacité de débruitage recherchée et ce pour un niveau de complexité associé, et pour, à l'étape b), comparer l'intérêt global à ces seuils.

14. Dispositif de traitement selon l'une des revendications 9 à 13, dans lequel l'image numérique est une image découpée en N zones de mêmes dimensions.

15. Dispositif de traitement selon la revendication 9, dans lequel l'image numérique est une image découpée en N zones de dimensions différentes.

**Patentansprüche**

1. Verfahren mithilfe von Informatikmitteln zur Verarbeitung von Rauschen in einem digitalen Bild, das mehrere Bildausschnitte umfasst, wobei das Verfahren umfasst:

a) Vordefinieren:

• von Interessekriterien für die Rauschunterdrückung in ausgewählten Details eines beliebigen Bildausschnitts des digitalen Bilds;
• einer Vielzahl von möglichen Verarbeitungen, die auf den Bildausschnitt angewendet werden, um Rauschen in den ausgewählten Details zu unterdrücken, wobei jede Verarbeitung eine Effizienz in Bezug auf ein zugeordnetes Komplexitätsniveau aufweist, wobei die möglichen Verarbeitungen nach steigendem Komplexitätsniveau geordnet sind;

b) für jeden Bildausschnitt:

• Analysieren des Bildausschnitts, wobei die Analyse umfasst: Quantifizieren eines Vorhandenseins eines oder mehrerer der ausgewählten Details in dem Bildausschnitt und Berechnen eines Gesamtinteresses des Bildausschnitts auf der Grundlage von jeweiligen Quantifizierungen des Vorhandenseins der ausgewählten Details, wobei die Analyse ferner die Berechnung von jeweils den ausgewählten Details zugeordneten K Metriken $M_1$, $M_2$, ..., $M_k$ von Interesse umfasst, wobei jede Metrik einem der vordefinierten Interessenkriterien eigen ist, wobei das Gesamtinteresse als Funktion der K Metriken von Interesse $IG = f(M_1, M_2, ..., M_k)$ berechnet wird, und
• Vergleichen des Gesamtinteresses mit den genannten Komplexitätsniveaus, um die Verarbeitung mit dem Komplexitätsniveau auszulösen, das dem Gesamtinteresse entspricht,

wobei das Verfahren **dadurch gekennzeichnet ist, dass**

jede der K Metriken von Interesse $M_1$, $M_2$, ..., $M_k$ ein Element umfasst aus: einem Prozentsatz von Pixeln, die als Schrift auf einem Bild erkannt werden, einer Kohärenz des Bewegungsvektorfelds, einem Prozentsatz von Blöcken, deren Bewegungsvektoramplitude größer ist als ein gegebener Schwellenwert und einem repräsentativen Ausprägungswert.

2. Verfahren nach Anspruch 1, wobei die ausgelöste Verarbeitung diejenige mit dem Komplexitätsniveau ist, das unmittelbar über dem berechneten Gesamtinteresse liegt, oder mit einem maximalen Komplexitätsniveau, wenn das Gesamtinteresse über dem maximalen Komplexitätsniveau liegt.

3. Verfahren nach einem der Ansprüche 1 und 2, wobei jede Verarbeitung durch wenigstens einen Verarbeitungstyp in Kombination mit einem dem Verarbeitungstyp zugeordneten Satz von Parametern definiert ist, wobei jede mögliche Kombination von Verarbeitungstyp mit einem zugeordneten Satz von Parametern eine Verarbeitungseffizienz in Bezug auf ein in Schritt a) vorab geschätztes Komplexitätsniveau aufweist, wobei die möglichen Kombinationen nach steigenden Komplexitätsniveaus in Schritt a) geordnet sind.

4. Verfahren nach Anspruch 3, wobei jede Verarbeitung durch mehrere kombinierte Verarbeitungstypen definiert wird, wobei jeder Verarbeitungstyp einen zugeordneten Satz von Parametern umfasst, wobei jede mögliche Kombination von Verarbeitungstypen eine Gesamtverarbeitungseffizienz in Bezug auf ein in Schritt a) vorab geschätztes Komplexitätsniveau aufweist, wobei die möglichen Kombinationen nach steigenden Komplexitätsniveaus in Schritt a) geordnet sind.

5. Verfahren nach einem der vorhergehenden Ansprüche, wobei in Schritt a) Schwellenwerte $S_1$, $S_2$,...,$S_{|C|-1}$ vordefiniert werden, wobei jeder Schwellenwert einer Verarbeitung zugeordnet wird, die eine gewünschte Rauschunterdrückung für ein zugeordnetes Komplexitätsniveau bietet, und wobei in Schritt b) das Gesamtinteresse mit diesen Schwellenwerten verglichen wird.

6. Verfahren nach einem der vorhergehenden Ansprüche, wobei das digitale Bild ein in N Bereiche gleicher Größe zerlegtes Bild ist.

7. Verfahren nach Anspruch 1, wobei das digitale Bild ein in N Bereiche unterschiedlicher Größe zerlegtes Bild ist.

8. Computerprogramm, umfassend Anweisungen zur Durchführung des Verfahrens nach einem der vorhergehenden Ansprüche, wenn diese Anweisungen von einem Prozessor ausgeführt werden.

9. Vorrichtung zur Rauschunterdrückung, die ein digitales Bild mit mehreren Bildausschnitten rauschfrei machen kann, wobei die Vorrichtung umfasst:

- einen Prozessor, der dazu ausgebildet ist, die folgenden Maßnahmen auszuführen:

a) Vordefinieren

• von Interessenkriterien für die Rauschunterdrückung in ausgewählten Details eines beliebigen Bildausschnitts des digitalen Bildes;
• einer Vielzahl von möglichen Verarbeitungen, die auf den Bildausschnitt angewendet werden, um Rauschen in den ausgewählten Details zu unterdrücken, wobei jede Verarbeitung eine Effizienz in Bezug auf ein zugeordnetes Komplexitätsniveau aufweist und die möglichen Verarbeitungen nach steigendem Komplexitätsniveau geordnet sind;

b) für jeden Bildausschnitt:

• Analysieren des Bildausschnitts, wobei die Analyse umfasst:
Quantifizieren eines Vorhandenseins eines oder mehrerer der ausgewählten Details in dem Bildausschnitt und Berechnen eines Gesamtinteresses des Bildausschnitts auf der Grundlage von jeweiligen Quantifizierungen des Vorhandenseins der ausgewählten Details, wobei die Analyse ferner die Berechnung von jeweils den ausgewählten Details zugeordneten K Metriken $M_1$, $M_2$, ..., $M_k$ von Interesse umfasst, wobei jede Metrik einem der vordefinierten Interessenkriterien eigen ist, wobei das Gesamtinteresse als Funktion der K Metriken von Interesse IG=f ($M_1$, $M_2$,..., $M_k$) berechnet wird, und
• Vergleichen des Gesamtinteresses mit den genannten Komplexitätsniveaus, um die Verarbeitung mit dem Komplexitätsniveau auszulösen, die dem berechneten Gesamtinteresse entspricht,

**dadurch gekennzeichnet, dass**
jede der K Metriken von Interesse $M_1$, $M_2$, ..., $M_k$ ein Element umfasst aus:

einem Prozentsatz von Pixeln, die als Schrift auf einem Bild erkannt werden,
einer Kohärenz des Bewegungsvektorfeldes, einem Prozentsatz von Blöcken,
deren Bewegungsvektoramplitude größer ist als ein gegebener Schwellenwert, und einem repräsentativen Ausprägungswert.

**10.** Verarbeitungsvorrichtung nach Anspruch 9, wobei die ausgelöste Verarbeitung diejenige mit dem Komplexitätsniveau ist, das unmittelbar über dem berechneten Gesamtinteresse liegt, oder mit einem maximalen Komplexitätsniveau, wenn das Gesamtinteresse über dem maximalen Komplexitätsniveau liegt.

**11.** Verarbeitungsvorrichtung nach einem der Ansprüche 9 oder 10, wobei jede Verarbeitung durch wenigstens einen Verarbeitungstyp in Kombination mit einem dem Verarbeitungstyp zugeordneten Satz von Parametern definiert ist, wobei jede mögliche Kombination von Verarbeitungstyp mit einem zugeordneten Satz von Parametern eine Verarbeitungseffizienz in Bezug auf ein in Schritt a) vorab geschätztes Komplexitätsniveau aufweist, wobei die möglichen Kombinationen nach steigenden Komplexitätsniveaus in Schritt a) geordnet sind.

**12.** Verarbeitungsvorrichtung nach Anspruch 11, wobei jede Verarbeitung durch mehrere kombinierte Verarbeitungstypen definiert ist, wobei jeder Verarbeitungstyp einen zugeordneten Satz von Parametern aufweist, wobei jede mögliche Kombination von Verarbeitungstypen eine Gesamtverarbeitungseffizienz in Bezug auf ein in Schritt a) vorab geschätztes Komplexitätsniveau aufweist, wobei die möglichen Kombinationen nach steigenden Komplexitätsniveaus in Schritt a) geordnet sind.

**13.** Verarbeitungsvorrichtung nach einem der Ansprüche 9 bis 13, wobei der Prozessor ferner derart ausgebildet ist, dass er in Schritt a) Schwellenwerte $S_1$, $S_2$,...,$S_{|C|-1}$ vordefiniert, wobei jeder Schwellenwert einer Verarbeitung zugeordnet ist, die eine gewünschte Rauschunterdrückungseffizienz für ein zugeordnetes Komplexitätsniveau bietet, und in Schritt b), Vergleichen des Gesamtinteresses mit diesen Schwellenwerten.

**14.** Verarbeitungsvorrichtung nach einem der Ansprüche 9 bis 13, wobei das digitale Bild ein in N Bereiche gleicher Größe zerlegtes Bild ist.

**15.** Verarbeitungsvorrichtung nach Anspruch 9, wobei das digitale Bild ein in N Bereiche unterschiedlicher Größe zerlegtes Bild ist.

**Claims**

**1.** A method, implemented by computer means, for processing noise in a digital image having a plurality of image portions, the method comprising:

a) Predefining:

• criteria of interest for denoising selected details of any image portion of the digital image;
• a plurality of possible processing procedures to be applied to an image portion in order to denoise said selected details, each processing procedure having an efficiency related to an associated complexity level, said possible processing procedures being ordered by increasing complexity level;

b) For each portion of the image:

• analyzing the image portion, the analysis comprising : quantifying a presence of one or more of said selected details in the image portion, and calculating an overall interest of the image portion as a function of respective quantifications of the presences of said selected details, the analysis further comprising the calculation of K interest metrics $M_1$,$M_2$,...,$M_K$, respectively associated with the selected details, each metric being specific to one of said criteria of interest predefined, wherein the overall interest is calculated as a function of the K interest metrics IG=f($M_1$, $M_2$,..., $M_K$), and
• comparing the overall interest at said complexity levels, in order to launch the processing procedure having the complexity level corresponding to the calculated overall interest,
**characterized in that** each K interest metrics $M_1$,$M_2$,...,$M_K$ comprises one among and a percentage of pixels detected as writing in an image, a coherence of the motion vector field, a percentage of blocks in which the magnitude of the motion vector is greater than a given threshold, and a representative saliency value.

2. The method according to claim 1, wherein the launched processing procedure is the one having the complexity level immediately above the calculated overall interest or having a maximum complexity level if the overall interest is greater than the maximum complexity level.

3. The method according to one of claim 1 and claim 2, wherein each processing procedure is defined by at least one processing type combined with a parameter set associated with the processing type, each possible combination of processing type and associated parameter set having a processing efficiency related to a complexity level pre-estimated in step a), said possible combinations being ordered by increasing complexity level in step a).

4. The method according to claim 3, wherein each processing procedure is defined by several combined processing types, each processing type having an associated parameter set, each possible combination of processing types having an overall processing efficiency related to a complexity level pre-estimated in step a), said possible combinations being ordered by increasing complexity level in step a).

5. The method according to one of the preceding claims , wherein, in step a), thresholds $S_1$,$S_2$,...,$S_{|C|-1}$ are predefined, each threshold being associated with a processing procedure providing a desired denoising efficiency for an associated complexity level, and in step b), the overall interest is compared to these thresholds.

6. The method according to one of the preceding claims, wherein the digital image is an image divided into N regions having the same dimensions.

7. The method according to claim 1, wherein the digital image is an image divided into N regions having different dimensions.

8. A computer program comprising instructions for implementing the method according to one of the preceding claims, when these instructions are executed by a processor.

9. A Noise processing device adapted to denoise a digital image comprising a plurality of image portions, the device comprising:

   - a processor configured to carry out the following operations:

   a) Predefining:

      • criteria of interest for denoising selected details of any image portion of the digital image;
      • a plurality of possible processing procedures to be applied to an image portion in order to denoise said selected details, each processing procedure having an efficiency related to an associated complexity level, said possible processing procedures being ordered by increasing complexity level;

   b) For each portion of the image:

      • analyzing the image portion, the analysis comprising : quantifying the presence of one or more of said selected details in the image portion, and calculating an overall interest of the image portion as a function of respective quantifications of the presences of said selected details, the analysis further comprising the calculation of K interest metrics $M_1$,$M_2$,...,$M_K$, respectively associated with the selected details, each metric being specific to one of said criteria of interest predefined, wherein the overall interest is calculated as a function of the K interest metrics IG=f($M_1$, $M_2$,..., $M_K$), and
      • comparing the overall interest at said complexity levels, in order to launch the processing procedure having the complexity level corresponding to the calculated overall interest,

**characterized in that** each K interest metrics M1,$M_2$,...,$M_K$ comprises one among and a percentage of pixels detected as writing in an image, a coherence of the motion vector field, a percentage of blocks in which the magnitude of the motion vector is greater than a given threshold, and a representative saliency value.

10. Processing device according to claim 9, wherein the launched processing procedure is the one having the complexity level immediately above the calculated overall interest or having a maximum complexity level if the overall interest is greater than the maximum complexity level.

11. Processing device according to one of claim 9 and claim 10, wherein each processing procedure is defined by at least one processing type combined with a parameter set associated with the processing type, each possible combination of processing type and associated parameter set having a processing efficiency related to a complexity level pre-estimated in step a), said possible combinations being ordered by increasing complexity level in step a).

12. Processing device according to claim 11, wherein each processing procedure is defined by several combined processing types, each processing type having an associated parameter set, each possible combination of processing types having an overall processing efficiency related to a complexity level pre-estimated in step a), said possible combinations being ordered by increasing complexity level in step a).

13. Processing device according to one of claims 9 to 13, wherein, in step a), thresholds $S_1,S_2,...,S_{|C|-1}$ are predefined, each threshold being associated with a processing procedure providing a desired denoising efficiency for an associated complexity level, and in step b), the overall interest is compared to these thresholds.

14. Processing device according to one of claims 9 to 13, wherein the digital image is an image divided into N regions having the same dimensions.

15. Processing device according to claim 9, wherein the digital image is an image divided into N regions having different dimensions.

FIG. 1A

FIG. 1B

FIG. 1C

FIG. 2A

FIG. 2B

FIG. 3A

FIG. 3B

FIG. 4

FIG. 5

## RÉFÉRENCES CITÉES DANS LA DESCRIPTION

**Documents brevets cités dans la description**

- WO 2016185079 A

**Littérature non-brevet citée dans la description**

- **CHEN et al.** An intelligent video noise réduction method using adaptative spatial and motion-compensation temporal filter. *IEEE Conference on Computational Photography,* 2003

- **MOSSERI et al.** Combining the power of internal and external denoising. *International Conference on Computational Photography,* 2003